# EUROPEAN PATENT APPLICATION

(11) **EP 4 597 618 A1**
(43) Date of publication of application: **06.08.2025**
(21) Application number: 23871474.5
(22) Date of filing: 04.08.2023
(51) Int. Cl.: H01M 4/24, C22C 19/00, H01M 4/26, H01M 4/38, H01M 4/62, H01M 10/30

(54) **NEGATIVE ELECTRODE FOR ALKALINE SECONDARY BATTERIES, ALKALINE SECONDARY BATTERY, AND METHOD FOR PRODUCING NEGATIVE ELECTRODE FOR ALKALINE SECONDARY BATTERIES**

(30) Priority: 28.09.2022 JP 2022154917
(71) Applicant: FDK Corporation, Tokyo 108-8212 (JP)
(72) Inventor: SHUTO, Mizuki, Tokyo 108-8212 (JP); OHATA, Shota, Tokyo 108-8212 (JP); MANABE, Takuro, Tokyo 108-8212 (JP); SAGUCHI, Akira, Tokyo 108-8212 (JP); ISHIDA, Jun, Tokyo 108-8212 (JP); KIHARA, Masaru, Tokyo 108-8212 (JP)
(74) Representative: Biallo, Dario
(86) International application number: PCT/JP2023/028587
(87) International publication number: WO 2024/070232

(57) **Abstract**

This negative electrode for alkaline secondary batteries comprises a negative electrode current collector and a negative electrode mixture that is supported by the negative electrode current collector. The negative electrode mixture contains a hydrogen storage alloy that has an Fe content of 200 to 900 ppm by mass, and a carbon black that has an Fe content of 1,000 to 2,800 ppm by mass.

## Description

### Technical Field

The present invention relates to a negative electrode for an alkaline secondary battery, an alkaline secondary battery, and a method for producing a negative electrode for an alkaline secondary battery.

### Background Art

Nickel-hydrogen secondary batteries have been used for various purposes such as electronic devices, electric devices, and hybrid electric vehicles, and the like, from the viewpoint of a high capacity and superiority in environmental safety, as compared to nickelcadmium secondary batteries. **In** recent years, with the further expansion of the purposes of nickel-hydrogen secondary batteries, there is a demand for further improvement in performance, specifically, improvement in discharge capacity and cycle characteristics.

The negative electrode of a nickel-hydrogen secondary battery typically includes a negative electrode current collector and a negative electrode mixture containing a hydrogen storage alloy, a conductive aid, and a binder, which are held by the negative electrode current collector. Here, it has been considered to enhance the conductivity of the negative electrode mixture and to improve the discharge capacity and cycle characteristics by using carbon black with a large surface area as a conductive aid.

For example, **PTL** 1 discloses a negative electrode obtained by applying a negative electrode mixture slurry containing a hydrogen storage alloy, Ketjen black, and a sulfonic acid group-containing polymer onto a negative electrode current collector. PTL 2 discloses an electrode including composite particles formed by supporting carbon fine particles on active material particles.

### Citation List

### Patent Literature

PTL 1
   Japanese Patent Application Laid-Open No. 2002-319401
PTL 2
   Japanese Patent Application Laid-Open No. H10-241677

### Summary of Invention

### Technical Problem

Even when a negative electrode as described in PTL 1 or 2 is used, the discharge capacity and the cycle characteristics of the battery cannot be satisfactorily enhanced.

The present invention has been made based on the above circumstances, and an object of the present invention is to provide a negative electrode for an alkaline secondary battery capable of satisfactorily enhancing a discharge capacity and cycle characteristics, an alkaline secondary battery using the negative electrode, and a method for producing a negative electrode for an alkaline secondary battery.

### Solution to Problem

The present invention relates to a negative electrode for an alkaline secondary battery, an alkaline secondary battery, and a method for producing a negative electrode for an alkaline secondary battery as follows.
[1] A negative electrode for an alkaline secondary battery, the negative electrode including: a negative electrode current collector; and a negative electrode mixture supported by the negative electrode current collector, in which
   the negative electrode mixture includes a hydrogen storage alloy with a Fe content of 200 to 900 mass ppm, and carbon black with a Fe content of 1000 to 2800 mass ppm.
[2] The negative electrode according to [1], in which a content of the carbon black in the negative electrode mixture is 0.5% to 1% by mass with respect to the hydrogen storage alloy.
[3] An alkaline secondary battery including: a positive electrode; a negative electrode; a separator disposed between the positive electrode and the negative electrode; and an electrolyte, in which
   the negative electrode includes a negative electrode current collector and a negative electrode mixture supported by the negative electrode current collector; and the negative electrode mixture includes a hydrogen storage alloy with a Fe content of 200 to 900 mass ppm, and carbon black with a Fe content of 1000 to 2800 mass ppm.
[4] The alkaline secondary battery according to [3], in which a content of the carbon black in the negative electrode mixture is 0.5% to 1% by mass with respect to the hydrogen storage alloy.
[5] The alkaline secondary battery according to [3] or [4], in which: the positive electrode includes a positive electrode current collector and a positive electrode mixture supported by the positive electrode current collector; and the positive electrode mixture includes nickel hydroxide.
[6] A method for producing a negative electrode for an alkaline secondary battery, the method including: preparing a negative electrode mixture slurry that includes a hydrogen storage alloy with a Fe content of 200 to 900 mass ppm, carbon black with a Fe content of 1000 to 2800 mass ppm, and a binder; and applying the negative electrode mixture slurry on a negative electrode current collector and drying the negative electrode mixture slurry.

### Advantageous Effects of Invention

The present invention can provide a negative electrode for an alkaline secondary battery capable of satisfactorily enhancing the discharge capacity and the cycle characteristics, an alkaline secondary battery using the negative electrode, and a method for producing a negative electrode for an alkaline secondary battery.

### Brief Description of Drawings

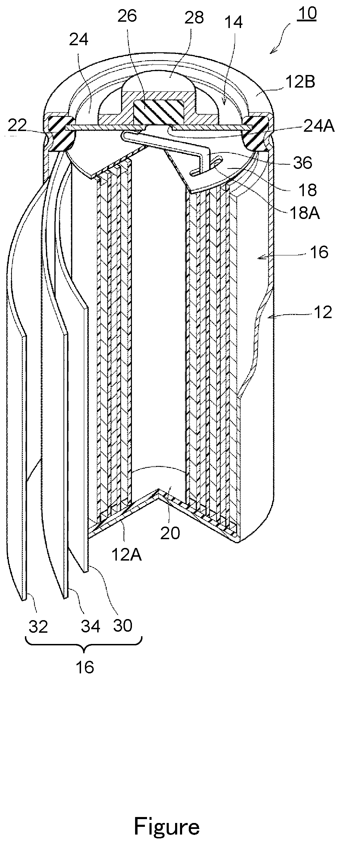

The Figure is a partially cutaway perspective view of a nickel-hydrogen secondary battery according to one embodiment of the present invention.

### Description of Embodiments

As described above, it is difficult to satisfactorily enhance the discharge capacity and the cycle characteristics with conventional carbon black and the like.

**In** contrast, the present inventors have found that carbon black containing an appropriate amount of Fe can satisfactorily enhance the discharge capacity and cycle characteristics of a battery. Further, it has been found that this effect is particularly remarkable when combined with a hydrogen storage alloy containing an appropriate amount of Fe.

The mechanism of the above configuration is not clear, but is presumed as follows.

Carbon black with a high Fe content has higher conductivity than conventional carbon black with a low Fe content because Fe, which is a highly conductive metal, is contained at a high content. Therefore, carbon black with a high Fe content is more likely to decrease the internal resistance of the battery, thereby satisfactorily enhancing the discharge capacity and the cycle characteristics.

On the other hand, Fe has a relatively high ionization tendency, and thus, is more likely to elute from carbon black into the electrolyte. In contrast, when combined with a hydrogen storage alloy containing an appropriate amount of Fe, the elution of Fe from the hydrogen storage alloy is prioritized, thereby reducing the elution of Fe from carbon black. This allows the Fe in the carbon black to more easily exert its effect of improving conductivity, thereby further improving the discharge capacity and cycle characteristics.

That is, the negative electrode for an alkaline secondary battery of the present invention includes the following as a negative electrode mixture: a hydrogen storage alloy containing an appropriate amount of Fe, and carbon black containing an appropriate amount of Fe. Hereinafter, a battery using a negative electrode for an alkaline secondary battery of the present invention will be described in detail.

### 1. Nickel-Hydrogen Secondary Battery

Hereinafter, a nickel-hydrogen secondary battery will be described as an example of an alkaline secondary battery according to the present embodiment.

The Figure is a partially cutaway perspective view of nickel-hydrogen secondary battery 10 according to an embodiment of the present invention. In the Figure, a part of wound body 16 is not illustrated.

As illustrated in the Figure, nickel-hydrogen secondary battery 10 according to the present embodiment is, for example, a cylindrical battery of an FA size, and includes outer can 12, sealing body 14, wound body 16 (electrode group), an electrolyte (not illustrated), upper insulation member 18, and lower insulation member 20.

Outer can 12 is a container for accommodating wound body 16, and in the present embodiment, is a container having a bottomed cylindrical shape with an open upper end. Outer can 12 is conductive, and bottom wall 12A thereof functions as a negative electrode terminal.

The material of outer can 12 may be any material as long as it is conductive and resistant to corrosion by an electrolyte and the electrochemical reactions inside a battery, and typically includes a metal material such as iron or steel.

Sealing body 14 is fixed to the opening of outer can 12 via insulation packing 22, and seals outer can 12 while providing a positive electrode terminal. Sealing body 14 includes lid plate 24, valve body 26, and positive electrode terminal 28.

Lid plate 24 is a conductive member having a disk shape and includes through-hole 24A at its center. Insulation packing 22 has a ring shape surrounding lid plate 24, and is interposed between outer can 12 and sealing body 14. Insulation packing 22 is fixed to opening edge 12B of outer can 12 by crimping opening edge 12B of outer can 12. Thus, lid plate 24 and insulation packing 22 cooperate with each other to hermetically close the opening of outer can 12.

Valve body 26 is made of rubber, and is disposed on the outer surface of lid plate 24 to block through-hole 24A.

Positive electrode terminal 28 is a metallic member having a cylindrical shape with a flange, and is electrically connected to the outer surface of lid plate 24 so as to cover valve body 26. Positive electrode terminal 28 presses valve body 26 toward lid plate 24. A gas vent hole (not illustrated) is opened to positive electrode terminal 28.

Further, in the normal operation, through-hole 24A is hermetically closed by valve body 26. When gas is generated within outer can 12 and the inner pressure thereof increases, on the other hand, valve body 26 is compressed by the inner pressure to open through-hole 24A, and as a result, gas is released to the outside from the inside of outer can 12 through through-hole 24A and the gas vent hole (not illustrated) of positive electrode terminal 28. That is, through-hole 24A, valve body 26, and positive electrode terminal 28 form a safety valve for the battery.

Wound body 16 includes positive electrode 30, negative electrode 32, and separator 34. That is, wound body 16 is an electrode group in which positive electrode 30 and negative electrode 32 are stacked with separator 34 interposed therebetween and wound. Specifically, wound body 16 is obtained by winding a laminate of separator 34, positive electrode 30, separator 34, and negative electrode 32 such that negative electrode 32 is on the outside.

Negative electrode 32 is disposed on the outermost peripheral surface of wound body 16, and negative electrode 32 is in contact with an inner wall surface of outer can 12. That is, negative electrode 32 and outer can 12, which is a negative electrode terminal, are electrically connected to each other.

Meanwhile, positive electrode lead 36 is connected to positive electrode 30 of wound body 16. One end of positive electrode lead 36 is connected to positive electrode 30, and the other end of positive electrode lead 36 is connected to lid plate 24. Thus, positive electrode 30 and positive electrode terminal 28 are electrically connected to each other via positive electrode lead 36 and lid plate 24.

Upper insulation member 18 is disposed between wound body 16 and lid plate 24. Thus, negative electrode 32 of wound body 16 does not contact sealing body 14. Further, upper insulation member 18 includes slit 18A, and positive electrode lead 36 passes through slit 18A.

Lower insulation member 20 is disposed between wound body 16 and the bottom of outer can 12. Thus, positive electrode 30 of wound body 16 does not contact the inner wall surface of outer can 12.

The electrolyte (not illustrated) is an alkaline electrolyte and is sealed within outer can 12. Wound body 16 is impregnated with the alkaline electrolyte which is mainly held by separator 34.

The alkaline electrolyte is preferably an aqueous solution containing at least one of KOH, NaOH, and LiOH as a solute. The solute concentration in the alkaline electrolyte is not particularly limited, but may be, for example, 7.0 to 10.0 N.

Next, each member constituting wound body 16 will be described.

### (Positive Electrode)

Positive electrode 30 includes a positive electrode current collector and a positive electrode mixture.

The positive electrode current collector may be, for example, a metal foil, a metal porous body that is mesh-shaped, sponge-shaped, fiber-shaped, or felt-shaped, or a punched metal, an expanded metal, or the like. The metal material of the positive electrode current collector may be any metal material that is stable even at the reaction potential of the positive electrode, such as nickel or stainless steel, and is preferably nickel. That is, the positive electrode current collector may be a foamed nickel or a mesh-shaped, sponge-shaped, fiber-shaped metal body made of nickel or subjected to nickel plating.

The positive electrode mixture is held by a positive electrode current collector and contains a positive electrode active material. Examples of the positive electrode active material include nickel hydroxide. The nickel hydroxide is, for example, in the form of a powder. Further, the nickel hydroxide particles may include at least one of cobalt (Co), zinc (Zn), and magnesium (Mg) solid-solubilized therein. Further, the nickel hydroxide particles may be nickel hydroxide particles including a cobalt compound that is trivalent or higher.

The positive electrode mixture may further contain a conductive aid, a positive electrode additive, a binder, and the like, as necessary.

Examples of the conductive aid include cobalt compounds, such as cobalt oxide and cobalt hydroxide, and cobalt.

The positive electrode additive can be added for the purpose of reducing the swelling of the positive electrode active material during charging or improving the control of the oxygen generation potential during charging. Examples of the positive electrode additive include yttrium oxide and zinc oxide.

The binder has a function of binding a positive electrode active material and a positive electrode additive to each other and of binding the positive electrode active material and the positive electrode additive to a positive electrode current collector. The binder may be a hydrophilic or hydrophobic polymer and examples thereof include hydroxypropyl cellulose (HPC), carboxymethyl cellulose (CMC), sodium polyacrylate, and fluorine-based polymers (such as polytetrafluoroethylene (PTFE) and polyvinylidene fluoride (PVdF)).

### (Negative Electrode)

Negative electrode 32 includes a negative electrode current collector and a negative electrode mixture.

The shape of the negative electrode current collector may be the same as described above, and is preferably a sheet-shaped metal base material having through-holes, such as a punching metal, an expanded metal, or a sintered body of metal powder. The metal material of the negative electrode current collector may be any metal material that is stable even at the reaction potential of the negative electrode, and is preferably nickel or iron.

The negative electrode mixture is held by the negative electrode current collector, and includes a hydrogen storage alloy containing a predetermined amount of Fe as a negative electrode active material and carbon black containing a predetermined amount of Fe as a conductive aid.

The crystal structure of the hydrogen storage alloy is not particularly limited, and may be any of an AB₅ type, an AB₂ type, an A₂B₇ type, an A₂B type, an AB type, or the like.

The composition of the hydrogen storage alloy is not particularly limited, but preferably has a composition represented by, for example, general formula (1).

Ln₁₋ₓMgₓNi_{y-a}Alₐ ... (1)

In general formula (1), Ln represents at least one element selected from rare earth elements (La, Ce, Pr, Nd, Pm, Sm, Eu, Gd, Tb, Dy, Ho, Er, Tm, Yb, Lu, Sc, and Y), Ti, and Zr. Among these, Y, Ti, and Zr are preferable.

In general formula (1), x, y, and a are each integers satisfying 0 < x < 0.30, 2.80 ≤ y ≤ 3.90, and 0.10 ≤ a ≤ 0.25.

A part of Ni may be substituted with another element (for example, at least one selected from V, Nb, Ta, Cr, Mo, Mn, Fe, Co, Ga, Zn, Sn, In, Cu, Si, P, and B).

In general formula (1), Ln and Mg are component A, and Ni and Al are component B. A hydrogen storage alloy represented by general formula (1) has a crystal structure in which an AB₂-type unit and an AB₅-type unit are stacked, that is, a so-called superlattice structure having an A₂B₇-type structure or an A₅B₁₉-type structure. A hydrogen storage alloy having such a superlattice structure has the advantage of stable hydrogen absorption and desorption, which is a characteristic of an AB₅-type alloy, and the advantage of a large hydrogen storage amount, which is a characteristic of an AB₂-type alloy. For this reason, the hydrogen storage alloy having the composition represented by general formula (1) is excellent in hydrogen storage capacity, and thus, can increase the capacity of the battery.

As described above, the hydrogen storage alloy contains a predetermined amount of Fe. Fe contained in the hydrogen storage alloy may be an impurity derived from a molten salt electrolysis product of a rare earth metal, namely a raw material, or from a production process. In the present invention, by using the hydrogen storage alloy containing a predetermined amount of Fe, it is possible to easily exhibit the effect of improving conductivity with carbon black containing Fe.

That is, the Fe content in the above hydrogen storage alloy is 200 to 900 mass ppm. When the Fe content in the hydrogen storage alloy is 200 mass ppm or more, Fe can be appropriately eluted into the electrolyte from the hydrogen storage alloy, and thus, the elution of Fe from the carbon black into the electrolyte can be reduced. As a result, the effect of enhancing the conductivity of the negative electrode mixture is easily exhibited, and the discharge capacity and the cycle characteristics are easily enhanced. When the Fe content in the hydrogen storage alloy is 900 mass ppm or less, the following can be prevented: Fe eluted from the hydrogen storage alloy migrates to the positive electrode, reducing the charge-discharge characteristics of the positive electrode. Therefore, particularly a decrease in the cycle characteristics can be prevented. From the same viewpoint, the Fe content in the hydrogen storage alloy is more preferably 230 to 750 mass ppm, and even more preferably 230 to 500 mass ppm.

The Fe content in a hydrogen storage alloy can be measured by the following method.
1) First, hydrogen storage alloy particles are pretreated by an acid decomposition method in accordance with JIS K 0116: 2014, and dissolved to form a solution.
2) The content of Fe ions/atoms in the obtained solution is measured using an ICP emission spectrometer, PS3520 UVDD **II,** manufactured by Hitachi, Ltd.

The content of the hydrogen storage alloy may be any value within a range such that a predetermined discharge capacity is obtained, and may be, for example, 94.0% to 99.4% by mass with respect to the negative electrode mixture.

The conductive aid functions to enhance the conductivity of the negative electrode mixture. The conductive aid includes carbon black containing a predetermined amount of Fe. Since carbon black containing a predetermined amount of Fe has high conductivity as compared with conventional carbon black with a low Fe content, the carbon black having high conductivity can easily decrease the internal resistance of the battery and satisfactorily enhance the discharge capacity and the cycle characteristics of the battery. Fe contained in carbon black may also be a metal impurity derived from a raw material or a production process, as described above.

The Fe content in the carbon black is preferably 1000 to 2800 mass ppm with respect to the carbon black. When the Fe content in the carbon black is 1000 mass ppm or more, the conductivity of the negative electrode mixture can be satisfactorily enhanced, thereby satisfactorily enhancing the discharge capacity and the cycle characteristics of the battery. When the Fe content in the carbon black is 2800 mass ppm or less, the crosslinking reaction of a rubber-like polymer or the like, namely a binder, is less likely to occur during electrode fabrication, and the handling property is less likely to be impaired. From the same viewpoint, the Fe content in the carbon black is more preferably 1000 to 2600 mass ppm, and even more preferably 2000 to 2600 mass ppm, with respect to the carbon black.

The Fe content in carbon black can be measured in the same manner as the Fe content in the hydrogen storage alloy.

The specific surface area of the carbon black is not particularly limited, and is preferably 500 m²/g or more, and more preferably 500 to 1500 m²/g. When the specific surface area is 500 m²/g or more, the carbon black can satisfactorily form a structure. The specific surface area of carbon black can be measured by the BET method using nitrogen adsorption in accordance with ASTM-D6556.

The content of the carbon black is preferably 0.5% to 1% by mass with respect to the hydrogen storage alloy. When the content of the carbon black is 0.5% by mass or more with respect to the hydrogen storage alloy, the conductivity is more likely to be further increased, and the charge and discharge characteristics and the cycle characteristics are more likely to be further increased. When the content of the carbon black is 1% by mass or less with respect to the hydrogen storage alloy, satisfactory content of the negative electrode active material is more likely to be achieved, and thus, the discharge capacity is less likely to be further impaired. From the same viewpoint, the content of the carbon black is more preferably 0.5% to 0.7% by mass with respect to the hydrogen storage alloy.

The negative electrode mixture may further contain a binder, a thickener, and a negative electrode auxiliary agent as necessary.

The binder functions to bind the hydrogen storage alloy particles and the conductive aid to each other, and to bind the hydrogen storage alloy particles and the conductive aid to the negative electrode current collector. Examples of the binder include rubber-like polymers such as styrene-butadiene rubber (SBR) and fluorine-based polymers (such as polytetrafluoroethylene (PTFE)). The content of the binder is preferably, for example, 0.1% to 5% by mass, and more preferably 0.5% to 1% by mass, with respect to the above-described hydrogen storage alloy.

The thickener can impart viscosity to the negative electrode mixture slurry described below, making it easier to form the negative electrode. Examples of the thickener include carboxymethyl cellulose (CMC) and sodium polyacrylate.

### (Separator)

As described above, separator 34 is disposed between positive electrode 30 and negative electrode 32 (see the Figure).

Examples of separator 34 include a nonwoven fabric made of polyamide fibers to which a hydrophilic functional group is added, a nonwoven fabric made of polyolefin fibers such as polyethylene or polypropylene to which a hydrophilic functional group is added, and a polyolefin-based microporous membrane such as polyethylene or polypropylene. Only one type of separator 34 may be used or two or more types of separators 34 may be used in combination.

### (Action)

Negative electrode 32 of nickel-hydrogen secondary battery 10 according to the above embodiment includes a hydrogen storage alloy containing a predetermined amount of Fe and carbon black containing a predetermined amount of Fe, as a negative electrode mixture. Carbon black containing a predetermined amount of Fe is more likely to enhance the conductivity of the negative electrode mixture. Further, the coexistence of the hydrogen storage alloy containing a predetermined amount of Fe can reduce the elution of Fe from the carbon black. This makes it easier for the carbon black to exhibit the effect of improving the conductivity of the negative electrode mixture, and allows the discharge capacity and the cycle characteristics of the battery to be satisfactorily enhanced.

### 2. Method for Producing Nickel-Hydrogen Secondary Battery

The nickel-hydrogen secondary battery can be produced by any method. For example, the above nickel-hydrogen secondary battery can be produced through the following steps: 1) preparing electrodes (positive electrode and negative electrode), and 2) obtaining a nickel-hydrogen secondary battery using the prepared electrodes.

### Step 1)

**In** the present step, a positive electrode and a negative electrode are prepared.

Positive electrode 30 can be fabricated, for example, by the following procedure.

First, a positive electrode active material, a conductive aid, a positive electrode additive, a binder, and water or a solvent are mixed and kneaded to obtain a positive electrode mixture slurry. Next, the obtained positive electrode mixture slurry is applied onto a positive electrode current collector, dried, and then rolled, and the resultant is cut to have a predetermined size to obtain positive electrode 30.

Similarly, negative electrode 32 can be fabricated, for example, by the following procedure.

First, a negative electrode active material including the above-described hydrogen storage alloy, a conductive aid including the above-described carbon black, a binder, and an appropriate amount of water or solvent as necessary are mixed to obtain a negative electrode mixture slurry. The obtained negative electrode mixture slurry is applied to the surface of a negative electrode current collector, dried, and then rolled as necessary, and the resultant is cut to have a predetermined size to obtain negative electrode 32.

### Step 2)

**In** the present step, a nickel-hydrogen secondary battery is fabricated using the prepared electrodes.

Specifically, a wound body is fabricated in which prepared positive electrode 30 and negative electrode 32 are stacked with separator 34 interposed therebetween and wound . Positive electrode lead 36 is welded to one end of positive electrode 30 in the longitudinal direction of the positive electrode. For example, separator 34, positive electrode 30, separator 34, and negative electrode 32 are stacked in this order and wound along the longitudinal direction such that negative electrode 32 is on the outside, thereby obtaining wound body 16.

After storing obtained wound body 16 in outer can 12 and injecting the electrolyte into outer can 12, the opening portion of outer can 12 is sealed with sealing body 14.

After leaving the obtained battery for a predetermined time, activation processing is performed by charging the battery under a predetermined condition. The activation condition can be adjusted according to the properties of the electrode active materials (positive electrode active material and negative electrode active material). As a result, nickel-hydrogen secondary battery 10 can be obtained.

### 3. Variations

**In** the above embodiment, an example of a cylindrical nickel-hydrogen secondary battery has been described, but the present invention is not limited thereto, and a prismatic nickel-hydrogen secondary battery may also be used.

Further, in the above embodiment, a negative electrode including a hydrogen storage alloy containing Fe and carbon black containing Fe is used as the negative electrode of the nickel-hydrogen secondary battery, but the present invention is not limited thereto, and the negative electrode may be used, for example, as the negative electrode of a hydrogen/air secondary battery. **In** a hydrogen/air secondary battery, the following air electrode can be used as the positive electrode: an air electrode in which an air electrode mixture containing an air electrode catalyst (for example, a redox catalyst such as a pyrochlore-type composite oxide), a nickel powder as a conductive aid, and a binder is supported by a positive electrode current collector such as foamed nickel.

### Examples

Hereinafter, the present invention will be described with reference to Examples. The scope of the present invention is not interpreted to be limited by the Examples.

### 1. Preparation of Materials

### 1-1. Negative Electrode Active Material

Hydrogen storage alloys 1 to 5 shown in Table 1 below were prepared.

**[Table 1]**

| | Crystal structure | Alloy composition | Amount of Fe in alloy | Remarks |
|---|---|---|---|---|
| | | | [mass ppm] | |
| Hydrogen storage alloy 1 | A₂B₇ type | La_{0.763}Mg_{0.237}Ni_{3.3}Al_{0.10} | 230 | Example |
| Hydrogen storage alloy 2 | | | 480 | Example |
| Hydrogen storage alloy 3 | | | 750 | Example |
| Hydrogen storage alloy 4 | | | 1000 | Comparative Example |
| Hydrogen storage alloy 5 | | | 100 | Comparative Example |

### (Fe Content)

The Fe content in a hydrogen storage alloy was measured by the following method.

Hydrogen storage alloy particles were pretreated by an acid decomposition method in accordance with JIS K 0116: 2014, and dissolved to form a solution. The content of Fe ions and atoms in the obtained solution was measured using an ICP emission spectrometer PS3520 UVDD II manufactured by Hitachi Ltd.

### 1-2. Conductive aid

Carbon black 1 to carbon black 5 shown in Table 2 below were prepared.

**[Table 2]**

| | Specific surface area | Amount of Fe in carbon black | Remarks |
|---|---|---|---|
| | [m²/g] | [mass ppm] | |
| Carbon black 1 | 1000 | 1080 | Example |
| Carbon black 2 | 1052 | 2051 | Example |
| Carbon black 3 | 1052 | 2513 | Example |
| Carbon black 4 | 1270 | 50 | Comparative Example |
| Carbon black 5 | 1052 | 3025 | Comparative Example |

The physical properties of carbon black were measured by the following methods.

### (Specific Surface Area)

The specific surface area was measured by the BET method through nitrogen adsorption in accordance with ASTM-D6556.

### (Fe Content)

The Fe content was measured in the same manner as in the hydrogen storage alloy described above.

### 2. Fabrication of Battery

### <Example 1>

### (1) Fabrication of Negative Electrode

To 100 parts by mass of the powder of hydrogen storage alloy 1 (with a Fe content of 230 mass ppm), 0.4 parts by mass of sodium polyacrylate, 0.1 parts by mass of carboxymethyl cellulose (CMC), 1.0 part by mass of a dispersion of styrene-butadiene rubber (SBR) with a solid content of 50% by mass, 0.5 parts by mass of carbon black 1 (with a Fe content of 1080 mass ppm), and 30 parts by mass of water were added and kneaded to obtain a negative electrode mixture slurry. The slurry was uniformly applied to both surfaces of a nickel-plated iron perforated plate serving as a negative electrode current collector, and then dried. The resultant was rolled and cut to have a predetermined size to fabricate a negative electrode.

### (2) Fabrication of Positive Electrode

A positive electrode mixture slurry was fabricated by mixing 88% by mass of nickel hydroxide containing 3% by mass of zinc and 1% by mass of cobalt with respect to metallic nickel as a positive electrode active material, 10% by mass of cobalt hydroxide as a conductive aid, 0.5% by mass of yttrium oxide and 0.5% by mass of zinc oxide as positive electrode additives, and 1% by mass of hydroxypropyl cellulose (HPC) as a binder. Foamed nickel serving as a positive electrode current collector was filled with the positive electrode mixture slurry, and drying was performed. The resultant was rolled and cut to have a predetermined size to fabricate a positive electrode.

### (3) Fabrication of Electrolyte

KOH, NaOH, and LiOH were mixed at a mass ratio of 5.0:1.5:1.0, further diluted with water, and an alkaline aqueous solution with a concentration of 8N was obtained as an electrolyte.

### (4) Fabrication of Battery

The above-fabricated positive electrode and negative electrode were wound together with a separator (polyolefin-based microporous film). Specifically, a laminate of the separator, the positive electrode, the separator, and the negative electrode stacked in this order was wound. The laminate was placed in a cylindrical outer can, and the above-described electrolyte was injected at a predetermined amount to fabricate a nickel-hydrogen secondary battery with a nominal capacity of 2300 mAh.

Subsequently, the obtained battery was activated by repeating a cycle of charging at 0.23 A for 16 hours and then discharging at 0.46 A until the battery voltage reached 1.0 V, five times.

### <Examples 2 to 7 and Comparative Examples 1 to 5 and 7>

Each negative electrode was fabricated in the same manner as in Example 1, except that at least one of the type of hydrogen storage alloy, the type of carbon black, and the content thereof was changed as shown in Table 3, and each battery was fabricated.

### <Comparative Example 6>

The present inventors tried to fabricate a negative electrode in the same manner as in Example 1 except that carbon black 1 was changed to carbon black 5. However, as the viscosity of the negative electrode mixture slurry increased, the slurry could not be applied uniformly, and thus the negative electrode could not be fabricated.

### <Evaluation>

### (1) Initial Charge and Discharge Characteristics

An obtained battery was charged at 2.3 A in a 25°C environment, and the charging was terminated when the battery voltage decreased by 10 mV from the maximum value, followed by a 1-hour rest. Subsequently, the battery was discharged at 6.9 A until the battery voltage reached 1.0 V. Then, the discharge capacity ratio when the discharge capacity of Comparative Example 1 was set to 100% was calculated.

### (2) Cycle Characteristics

The obtained battery was charged at 1.0C in a 25°C environment, and the charging was terminated when the battery voltage decreased by 10 mV from the maximum value, followed by a 1-hour rest. Subsequently, the battery was discharged at 1.0C until the battery voltage reached 1.0V, followed by a 1-hour rest. A charge and discharge test with the above procedure as one cycle was repeatedly performed.

The time when the discharge capacity reached 60% of the discharge capacity of the first cycle was defined as the cycle life, and a cycle life ratio was obtained with the cycle life of Comparative Example 1 defined as 100%.

### (3) Manufacturability of Electrode Plate

**In** the fabrication of the negative electrode, a comparative example in which a negative electrode mixture slurry with an increased viscosity could not be uniformly applied was marked as ×, and examples and comparative examples in which a negative electrode mixture slurry could be uniformly applied were marked as ∘.

Table 3 shows the evaluation results of Examples 1 to 7 and Comparative Examples 1 to 7.

**[Table 3]**

| | Negative electrode active material | | Carbon black | | Content of carbon black (alloy ratio) [% by mass] | Initial Characteristics | Cycle Characteristics | Manufacturability of electrode plate |
|---|---|---|---|---|---|---|---|---|
| | Type | Amount of Fe [Mass ppm] | Type | Amount of Fe [mass ppm] | | Discharge capacity ratio [%] | Capacity maintenance rate [%] | |
| Example 1 | Hydrogen storage alloy 1 | 230 | Carbon black 1 | 1080 | 0.5 | 103.9 | 103.4 | ○ |
| Example 2 | Hydrogen storage alloy 1 | 230 | Carbon black 2 | 2051 | 0.5 | 104.5 | 106.8 | ○ |
| Example 3 | Hydrogen storage alloy 1 | 230 | Carbon black 2 | 2051 | 0.7 | 105 | 115.8 | ○ |
| Example 4 | Hydrogen storage alloy 2 | 480 | Carbon black 1 | 1080 | 0.5 | 103.9 | 103.4 | ○ |
| Example 5 | Hydrogen storage alloy 2 | 480 | Carbon black 2 | 2051 | 0.5 | 104.5 | 106.8 | ○ |
| Example 6 | Hydrogen storage alloy 3 | 750 | Carbon black 2 | 2051 | 0.5 | 102.3 | 102.3 | ○ |
| Example 7 | Hydrogen storage alloy 1 | 230 | Carbon black 3 | 2513 | 0.5 | 106.1 | 108.4 | ○ |
| Comparative Example 1 | Hydrogen storage alloy 2 | 480 | Carbon black 4 | 50 | 0.5 | 100 | 100 | ○ |
| Comparative Example 2 | Hydrogen storage alloy 3 | 750 | Carbon black 4 | 50 | 0.5 | 97.9 | 95.7 | ○ |
| Comparative Example 3 | Hydrogen storage alloy 4 | 1000 | Carbon black 4 | 50 | 0.5 | 97.9 | 92.5 | ○ |
| Comparative Example 4 | Hydrogen storage alloy 4 | 1000 | Carbon black 1 | 1080 | 0.5 | 101.7 | 95.7 | ○ |
| Comparative Example 5 | Hydrogen storage alloy 4 | 1000 | Carbon black 2 | 2051 | 0.5 | 102.3 | 98.8 | ○ |
| Comparative Example 6 | Hydrogen storage alloy 1 | 230 | Carbon black 5 | 3025 | 0.5 | - | - | × |
| Comparative Example 7 | Hydrogen storage alloy 5 | 100 | Carbon black 1 | 1080 | 0.5 | 97.5 | 93.4 | ○ |

As shown in Table 3, it is found that the batteries of Examples 1 to 7, in which the negative electrode including a hydrogen storage alloy containing a predetermined amount of Fe and the carbon black containing a predetermined amount of Fe are used, exhibit both a discharge capacity ratio and a cycle life ratio exceeding 100% and show superior performance as compared to the battery of Comparative Example 1.

In contrast, it is found that when the Fe content in carbon black is small (when Ketjen black is used), both the discharge capacity ratio and the cycle life ratio are low (see Comparative Examples 1 to 3). It is presumed that the Fe content was too low, resulting in no improvement in conductivity. On the other hand, it is found that when the Fe content in the carbon black is too high, the coatability of the negative electrode mixture slurry is poor, and the electrode plate cannot be fabricated (see Comparative Example 6). It is considered that when the amount of Fe in the carbon black is excessive, the viscosity increases due to a crosslinking reaction with the binder, resulting in poor coatability.

Further, it is found that even in a case where carbon black containing a predetermined amount of Fe is used, the discharge capacity ratio and the cycle life ratio are still low when the Fe content in the hydrogen storage alloy is as small as 100 mass ppm (see Comparative Example 7). In order to exhibit the conductivity of Fe in carbon black, it is suggested that the hydrogen storage alloy preferably contains a certain amount of Fe. That is, when a hydrogen storage alloy includes a certain amount of Fe, the elution of Fe from the hydrogen storage alloy is prioritized, and therefore, the elution of Fe from the carbon black is reduced to improve the conductivity.

On the other hand, it is found that when the Fe content in the hydrogen storage alloy is too high, i.e., as high as 1000 mass ppm, the cycle life ratio is not improved (see Comparative Examples 3 to 5). It is presumed that this is because Fe eluted from the hydrogen storage alloy into the electrolyte migrates to the positive electrode, thereby decreasing the charge and discharge characteristics of the positive electrode.

This application is entitled to and claims the benefit of Japanese Patent Application No. 2022-154917, filed on September 28, 2022. The contents described in the specification are all incorporated herein by reference.

### Industrial Applicability

According to the negative electrode for an alkaline secondary battery of the present invention, it is possible to satisfactorily enhance the discharge capacity and the cycle characteristics of the battery. Accordingly, the negative electrode for an alkaline secondary battery can be preferably used as a negative electrode of, for example, a nickel-hydrogen secondary battery, a hydrogen/air secondary battery, or the like.

### Reference Signs List

10 Nickel-hydrogen secondary battery
12 Outer can
12A Bottom wall
12B Opening edge
14 Sealing body
16 Wound body (electrode group)
18 Upper insulation member
20 Lower insulation member
22 Insulation packing
24 Lid plate
26 Valve body
28 Positive electrode terminal
30 Positive electrode
32 Negative electrode
34 Separator
36 Positive electrode lead
38 Negative electrode current collector

## Claims

1. A negative electrode for an alkaline secondary battery, the negative electrode comprising:
a negative electrode current collector; and
a negative electrode mixture supported by the negative electrode current collector,
wherein
the negative electrode mixture includes
a hydrogen storage alloy with a Fe content of 200 to 900 mass ppm, and
carbon black with a Fe content of 1000 to 2800 mass ppm.

2. The negative electrode according to claim 1, wherein
a content of the carbon black in the negative electrode mixture is 0.5% to 1% by mass with respect to the hydrogen storage alloy.

3. An alkaline secondary battery comprising:
a positive electrode;
a negative electrode;
a separator disposed between the positive electrode and the negative electrode; and
an electrolyte,
wherein
the negative electrode includes a negative electrode current collector and a negative electrode mixture supported by the negative electrode current collector, and
the negative electrode mixture includes a hydrogen storage alloy with a Fe content of 200 to 900 mass ppm, and carbon black with a Fe content of 1000 to 2800 mass ppm.

4. The alkaline secondary battery according to claim 3, wherein
a content of the carbon black in the negative electrode mixture is 0.5% to 1% by mass with respect to the hydrogen storage alloy.

5. The alkaline secondary battery according to claim 3 or 4, wherein:
the positive electrode includes a positive electrode current collector and a positive electrode mixture supported by the positive electrode current collector; and
the positive electrode mixture includes nickel hydroxide.

6. A method for producing a negative electrode for an alkaline secondary battery, the method comprising:
preparing a negative electrode mixture slurry that includes a hydrogen storage alloy with a Fe content of 200 to 900 mass ppm, carbon black with a Fe content of 1000 to 2800 mass ppm, and a binder; and
applying the negative electrode mixture slurry on a negative electrode current collector and drying the negative electrode mixture slurry.
